# DEMANDE DE BREVET EUROPEEN

(11) **EP 2 778 542 A1**
(43) Date de publication de la demande: **17.09.2014**
(21) Numéro de dépôt: 13305272.0
(22) Date de dépôt: 12.03.2013
(51) Int. Cl.: F24D 17/00, F24D 17/02, F24F 12/00

(54) **Installation de production d'eau chaude sanitaire dans une habitation via un chauffe-eau thermodynamique sur air extrait.**

(71) Demandeur: BDR Thermea Group, 67580 Mertzwiller (FR)
(72) Inventeur: Bastien, Dominique, 67590 Schweighouse sur Moder (FR); Mourlam, Jérémie, 67110 Oberbronn (FR)
(74) Mandataire: Littolff, Denis

(57) **Abrégé**

Installation de production d'eau chaude sanitaire dans une habitation comportant un réseau aéraulique et un chauffe-eau (4) thermodynamique fonctionnant sur air extrait intégrant une pompe à chaleur, ledit chauffe-eau (4) comportant au moins une entrée pour l'aspiration de l'air extrait et une sortie pour le rejet de l'air vicié vers l'extérieur de l'habitation et un ventilateur d'aspiration de l'air extrait. Cette installation est caractérisée en ce que ledit chauffe-eau (4) comporte n entrées (18, 19, 20) pour l'aspiration de l'air extrait, n étant un nombre entier supérieur à 1, sur lesquelles sont connectées des conduites principales (6, 7, 8) reliant directement des bouches d'extraction (9, 10, 11) de n pièces (1, 2, 3) de l'habitation au chauffe-eau (4).

## Description

La présente invention a trait aux domaines techniques combinés de la ventilation mécanique contrôlée (VMC) et de l'eau chaude sanitaire (ECS), dans des habitations.

Compte tenu des nouvelles préoccupations en termes de bilan énergétique dans l'habitat, des solutions techniques ont été développées pour réaliser des économies d'énergie dans les habitations.

Les besoins en chauffage tendent à diminuer fortement car les progrès réalisés sur l'isolation et la conception des logements ont permis de réduire de manière importante les déperditions thermiques des habitations, notamment dans les bâtiments basse consommation (BBC) par exemple.

Les besoins en eau chaude sanitaire étant incompressibles, la consommation liée à sa production devient le premier poste énergivore dans un logement.

Des solutions pour produire de l'eau chaude sanitaire à moindre coût en puisant des calories récupérées via la VMC ont donc été développées. L'une de ces solutions consiste en un chauffe-eau thermodynamique fonctionnant à partir d'air extrait.

Ce chauffe-eau thermodynamique intègre une pompe à chaleur pour chauffer l'eau chaude sanitaire en coopérant avec la VMC. En effet, la récupération des calories présentes dans l'air chaud de la VMC au travers de l'évaporateur de la pompe à chaleur du chauffe-eau thermodynamique permet de valoriser l'air extrait (chaud) et d'obtenir des coefficients de performance (COP) élevés, en d'autres termes un très bon rapport entre la quantité de chaleur produite par la pompe à chaleur et l'énergie électrique consommée par le compresseur.

Un tel chauffe-eau thermodynamique est principalement composé d'un réservoir d'eau en partie inférieure et d'un réceptacle aéraulique en partie supérieure. Dans les installations existantes, ce réceptacle contient un unique orifice d'entrée où arrive la totalité de l'air extrait, un ventilateur d'aspiration de l'air extrait de la VMC, et un unique orifice de sortie de l'air vicié vers l'extérieur de l'habitat.

Parallèlement, dans les plafonds de l'habitat est installé un réseau aéraulique constitué d'un caisson collecteur où viennent se raccorder, en entrée, toutes les conduites d'air extrait en provenance de bouches d'extraction localisées dans les pièces à ventiler, comme les sanitaires et la cuisine. En cas d'absence de caisson collecteur, les conduites d'air extrait sont connectées les unes aux autres en parapluie.

Une unique conduite en sortie de ce collecteur ou de ce réseau en parapluie est reliée à l'orifice d'entrée du chauffe-eau thermodynamique, situé dans une pièce de l'habitat vu son encombrement, de manière à amener la totalité de l'air extrait vers la pompe à chaleur.

Ce système combiné chauffe-eau / VMC présente donc l'avantage de produire de l'eau chaude sanitaire, en utilisant les calories présentes dans l'air extrait du logement.

Le caisson collecteur présente l'avantage de centraliser toutes les conduites d'air extrait au niveau du plafond, et il est conçu pour que son volume s'intègre correctement par exemple dans un faux plafond. La liaison entre le caisson collecteur et le chauffe-eau est facilement réalisable, et n'est au surplus pas encombrante, puisqu'il n'y a dès lors qu'une seule conduite à faire passer, cette dernière n'étant plus visible que par exemple au fond d'une armoire dans laquelle se trouve le chauffe-eau.

Cependant, ce système présente l'inconvénient d'engendrer des débits de fuite, notamment au niveau du caisson collecteur à l'emplacement des connexions aérauliques aux entrées et à la sortie. Ces débits de fuite ont pour effet de dégrader la pression disponible dans le circuit de la VMC, et donc les performances de la VMC et par conséquent du chauffe-eau.

Dans le cadre de nouvelles exigences en matière de norme et/ou de prescription dans les installations de VMC, les différents constructeurs doivent être en mesure d'apporter des solutions techniques permettant d'assurer un niveau de débit/pression suffisant.

L'une de ces solutions pour satisfaire à ces nouvelles exigences consiste à utiliser un ventilateur d'aspiration présentant de meilleures performances, pour combler le manque de pression suite aux débits de fuite.

Une autre solution en vue de compenser le manque de pression consiste à augmenter le diamètre de l'entrée d'aspiration et de la sortie de refoulement de l'air du réceptacle aéraulique du chauffe-eau. Dans ce cas, il est également nécessaire d'augmenter la section de la conduite entre le collecteur et le réceptacle, et par conséquent le diamètre de sortie du collecteur.

Ces solutions, actuellement mises en place, permettent de pallier le manque de pression, mais ne permettent pas de réduire les débits de fuite en eux-mêmes. Or, il s'agit là d'un aspect important du problème. Ces solutions ne sont donc pas optimales en termes énergétiques.

La présente invention offre une solution permettant d'optimiser les dépenses énergétiques de l'ensemble VMC / chauffe-eau thermodynamique, en réduisant considérablement les débits de fuite dans le réseau aéraulique, ce dernier restant facilement intégrable dans le plafond du logement. Cette solution présente de plus le double avantage d'être simple de mise en oeuvre et non encombrante, étant donné la contrainte liée au volume restreint disponible dans un plafond et dans un placard destiné à recevoir un chauffe-eau.

Pour ce faire, l'invention, qui concerne classiquement une installation de production d'eau chaude sanitaire dans une habitation comportant un réseau aéraulique et un chauffe-eau thermodynamique fonctionnant sur air extrait intégrant une pompe à chaleur, ledit chauffe-eau comportant au moins une entrée pour l'aspiration de l'air extrait et une sortie pour le rejet de l'air vicié vers l'extérieur de l'habitation et un ventilateur d'aspiration de l'air extrait, se caractérise à titre principal en ce que ledit chauffe-eau comporte n entrées pour l'aspiration de l'air extrait, n étant un nombre entier supérieur à 1, sur lesquelles sont connectées des conduites principales reliant directement des bouches d'extraction de n pièces de l'habitation au chauffe-eau.

Il s'agit d'une nouvelle conception d'un ensemble VMC / chauffe-eau thermodynamique, où le caisson collecteur est - à rebours de ce qui s'est fait jusqu'ici de façon systématique - supprimé du réseau aéraulique, afin d'éviter une dégradation des caractéristiques aérauliques intéressantes entre les bouches d'extraction des pièces et le chauffe-eau.

Les zones de fuites, qui participent typiquement à cette dégradation, se situent principalement au niveau des jonctions. Il peut s'agir de la jonction entre la bouche d'extraction et une conduite, entre une conduite et une entrée/sortie d'un caisson collecteur, du caisson collecteur lui-même ou entre une conduite et une entrée/sortie du chauffe-eau.

Aussi, pour réduire le nombre de jonctions potentiellement génératrices de fuites, l'idée de l'invention consiste à enlever le caisson collecteur et à prolonger les conduites depuis les bouches d'extraction jusqu'au chauffe-eau directement. Le fait de supprimer le caisson collecteur permet de façon simultanée de réduire les fuites et les pertes de charge inévitablement générées entre les entrées d'air et la sortie d'air du caisson, du fait de sa géométrie.

Le réseau aéraulique est par conséquent très différent, avec des longueurs de conduites plus grandes, lesdites conduites circulant dans le plafond et convergeant au niveau de la zone du plafond au-dessous de laquelle est installé le chauffe-eau thermodynamique. La réservation dans le plafond doit alors être adaptée à faire passer plusieurs conduites.

Le chauffe-eau thermodynamique est lui-même équipé de plusieurs entrées, et non plus d'une seule entrée d'air, de manière à pouvoir raccorder les différentes conduites provenant directement des bouches d'extraction des pièces à ventiler.

De cette manière, les débits de fuite sont grandement réduits sans qu'il soit nécessaire de recourir à une augmentation des diamètres des entrées/sorties d'air et des conduites, et sans surdimensionner le ventilateur d'aspiration d'air.

Cette installation peut être faite aussi bien dans un appartement d'un immeuble, dans le cas où les appartements de l'immeuble possèdent chacun leur propre réseau de ventilation indépendant des autres, que dans une maison individuelle.

Elle est simple de réalisation, à titre principal car l'étape d'intégration d'un caisson collecteur dans le plafond est supprimée, facilitant la mise en place d'un réseau aéraulique lors d'une construction d'un logement neuf. Le coût d'une telle installation est au surplus bien inférieur à celui d'une installation de l'art antérieur.

Dans de nombreux logements actuels, le caisson collecteur n'est d'ailleurs pas installé dans le plafond par manque de place, et est souvent placé dans l'armoire où se trouve le chauffe-eau. Il est dès lors très facile de réaliser une installation selon la présente invention en enlevant le caisson collecteur et en prolongeant les conduites pour les amener directement vers le chauffe-eau thermodynamique, qui doit alors être équipé d'un réceptacle à plusieurs entrées d'air. Dans ce cas, la nouvelle installation permet par la même occasion un gain de place dans le placard.

De manière générale, cette installation présente également l'avantage de permettre un entretien simple et rapide notamment de la VMC car les bouches d'extraction sont accessibles depuis les pièces à ventiler, et les entrées d'air sont accessibles au niveau du chauffe-eau. Dans les installations existantes, l'entretien du caisson collecteur n'est souvent guère évident, car difficilement voire pas du tout accessible. De plus, pour nettoyer le caisson collecteur, il est nécessaire de démonter les conduites des entrées/sorties, créant le risque de générer des fuites supplémentaires lorsque le remontage n'est pas parfaitement réalisé, ce qui n'est pas rare lorsque l'accessibilité au caisson est restreinte.

Selon une possibilité propre à l'invention, des pièces supplémentaires auxdites n pièces peuvent être raccordées à l'installation au moyen de dispositifs intermédiaires de raccordement, du type té, fixés sur les conduites principales, des conduites secondaires étant prévues entre les bouches d'extraction desdites pièces supplémentaires et lesdits dispositifs de raccordement. Il est ainsi possible d'agrandir le réseau aéraulique dans le plafond et d'adapter l'installation à toutes sortes de configurations de locaux.

A titre d'exemple, selon une configuration possible, le chauffe-eau peut comporter :
- deux entrées pour l'aspiration de l'air extrait de deux pièces sanitaires ;
- et une entrée pour l'aspiration de l'air extrait d'une pièce cuisine ; trois conduites principales étant prévues pour relier directement ces trois entrées aux bouches d'extraction des trois pièces.

Cette configuration est plutôt standard pour un logement.

En pratique, le chauffe-eau est principalement composé d'un réservoir d'eau surmonté d'un réceptacle aéraulique contenant le ventilateur et la pompe à chaleur, la surface supérieure dudit réceptacle étant dotée de n orifices d'entrée sur lesquels se raccordent les n conduites principales pour l'entrée d'air extrait, et d'un orifice de sortie sur lequel se raccorde une conduite pour la sortie de l'air vicié. La surface supérieure du réceptacle est ainsi adaptée pour accueillir toutes les conduites principales du réseau aéraulique. L'air extrait arrive ainsi directement au sein du réceptacle du chauffe-eau, sans passer par un dispositif intermédiaire.

De préférence, le diamètre de chaque orifice d'entrée correspond au diamètre de la bouche d'extraction à laquelle il est directement relié via une conduite principale de section constante.

Selon une possibilité, le diamètre des orifices d'entrée est compris entre 80 et 160 mm. La variation de la section de chaque orifice permet de réguler le niveau de débit d'air, de manière à répondre aux différentes exigences techniques requises dans les bâtiments et à s'adapter au lieu d'implantation, notamment aux volumes des pièces concernées.

Puisqu'il y a une corrélation directe entre la section des orifices d'entrée d'air du réceptacle, la section des conduites et la section des bouches d'extraction, il est aisé de jouer sur ce paramètre dimensionnel pour faire varier le niveau de débit d'air extrait et la pression dans le réseau aéraulique. Dans les installations antérieures, une augmentation du débit d'air entrainait dans bien des cas une augmentation des fuites, empêchant dès lors toute régulation correcte du système du fait du défaut de maîtrise des flux.

A l'inverse, l' « étanchéité » de l'installation selon l'invention offre la possibilité de paramétrer et de réguler de manière optimale l'ensemble VMC / chauffe-eau thermodynamique selon les besoins énergétiques du logement, au surplus de manière contrôlable et fiable.

L'invention va à présent être décrite plus en détail, en référence aux figures annexées, pour lesquelles :
- la figure 1 est une vue générale d'une installation de production d'eau chaude sanitaire selon l'art antérieur ;
- la figure 2 est une vue générale d'une installation de production d'eau chaude sanitaire selon l'invention ;
- la figure 3 illustre une configuration possible d'un chauffe-eau thermodynamique selon l'invention ;
- la figure 4 est une vue de dessus du chauffe-eau thermodynamique représenté en figure 3.

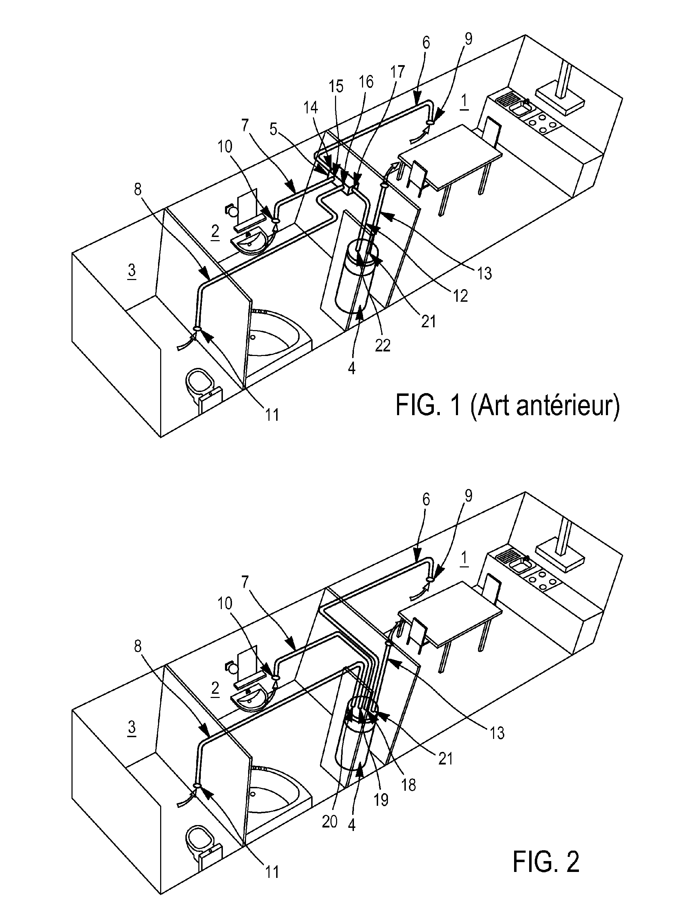

Sur la vue de la figure 1, qui représente une installation de l'art antérieur, on distingue trois pièces (1, 2, 3) d'un logement devant être ventilées (débits d'air réglementés) suite à des rejets d'humidité et/ou d'odeur. Il s'agit de la cuisine (1), de la salle de bain (2) et des toilettes (3).

Pour évacuer l'air vicié de ces pièces, un réseau aéraulique est mis en place dans le plafond du logement. Plus précisément, des bouches d'extraction (9, 10, 11) localisées respectivement dans le plafond des pièces (1, 2, 3) sont reliées via des conduites (6, 7, 8) à des entrées d'air (14, 15, 16) d'un caisson collecteur (5), intégré également dans le plafond. L'air extrait desdites pièces (1, 2, 3) arrive ainsi dans ce caisson collecteur (5), puis en ressort via une conduite (12) reliant une sortie d'air (17) du caisson collecteur (5) à une entrée d'air (22) d'un chauffe-eau (4) thermodynamique situé dans une armoire d'une pièce du logement. Un ventilateur prévu au sein du chauffe-eau (4) thermodynamique permet d'aspirer l'air vicié. Les calories de cet air extrait sont transmises au fluide frigorigène du chauffe-eau (4) thermodynamique via un échangeur de chaleur pour la production d'eau chaude sanitaire. En effet, l'air extrait des différentes pièces est un air chaud du fait du chauffage des pièces et de la chaleur générée soit par la cuisson (plaques de cuisson, four) dans la cuisine, soit par l'utilisation d'eau chaude (bain, douche) dans les pièces sanitaires.

Une fois les calories extraites au moyen d'un dispositif de pompe à chaleur prévu dans le chauffe-eau (4) thermodynamique, l'air vicié ainsi refroidi est rejeté vers l'extérieur du logement au moyen d'une conduite (13) reliée à une sortie d'air (21) du chauffe-eau (4).

Dans une telle installation de l'art antérieur, les débits de fuite sont importants, et ne permettent pas d'optimiser les dépenses énergétiques en terme de production d'eau chaude sanitaire et de VMC.

La figure 2 reprend le même logement que celui de la figure 1, mais l'installation est différente et représente une configuration possible de l'invention.

L'air chaud vicié est toujours extrait des trois pièces (1, 2, 3) via des conduites (6, 7, 8) reliant les bouches d'extraction (9, 10, 11) prévues dans le plafond. Ces conduites (6, 7, 8) ne sont plus reliées à un caisson collecteur, mais directement reliées au chauffe-eau (4) thermodynamique situé dans un placard du logement. Les conduites (6, 7, 8) sont ainsi plus longues, et cheminent à l'horizontale dans le plafond, puis à la verticale dans l'armoire pour venir se raccorder sur le chauffe-eau (4) au niveau de trois entrées d'air (18, 19, 20) prévues à cet effet.

De la même manière, une fois les calories extraites au moyen d'un dispositif de pompe à chaleur prévu dans le chauffe-eau (4) thermodynamique, l'air vicié ainsi refroidi est rejeté vers l'extérieur du logement au moyen d'une conduite (13) reliée à une sortie d'air (21) du chauffe-eau (4).

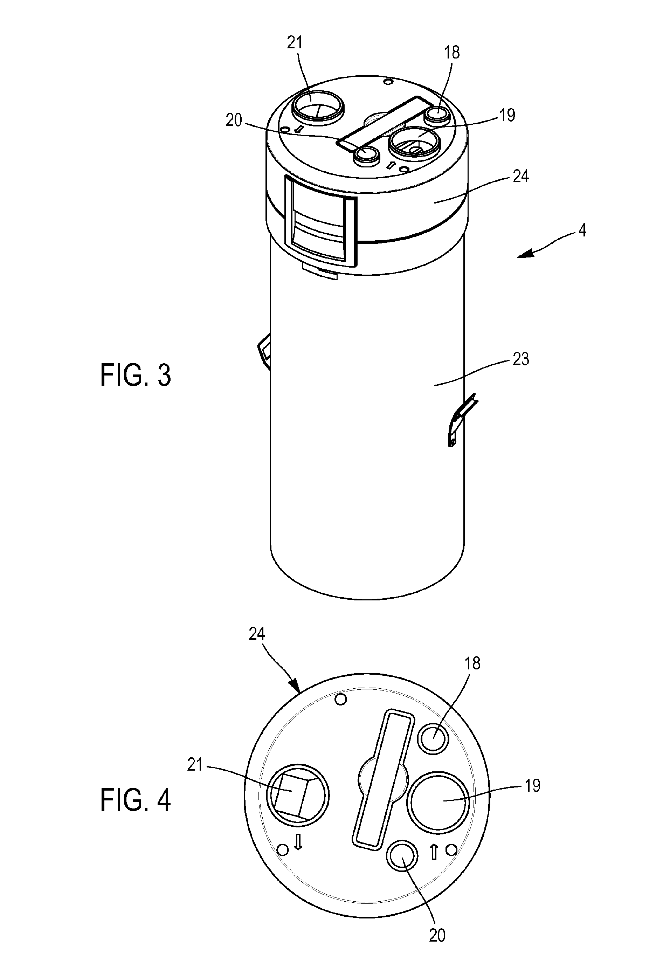

Les figures 3 et 4 montrent la nouvelle conception du chauffe-eau (4) thermodynamique selon l'invention. Ce chauffe-eau (4) est traditionnellement composé d'un réservoir d'eau (23) en partie inférieure et d'un réceptacle aéraulique (24) en partie supérieure qui contient le ventilateur d'aspiration d'air (non visible). C'est ce réceptacle aéraulique (24) qui constitue le coeur de l'invention, en ce qu'il est conçu pour présenter plusieurs orifices d'entrées d'air (18, 19, 20) au niveau de sa surface supérieure et permettre ainsi le branchement de plusieurs conduites en parallèle. Le diamètre des orifices d'entrées d'air (18, 19, 20) peut varier en fonction du diamètre des conduites à raccorder. L'orifice de sortie d'air (21) est également pratiqué sur la surface supérieure du réceptacle aéraulique (24).

La zone de connexion entre les conduites (6, 7, 8, 13) et le chauffe-eau (4) est ainsi directement accessible pour la maintenance et l'entretien de la VMC et du chauffe-eau, et permet à fortiori de réaliser les raccords de manière plus précise et plus fiable vu l'espace de travail disponible, afin de limiter les fuites.

Les exemples donnés ci-dessus ne sont pas exhaustifs de l'invention, qui englobe au contraire des variantes au niveau du nombre de conduites et d'entrées d'air sur le réceptacle aéraulique, à la portée de l'homme de l'art.

## Revendications

1. Installation de production d'eau chaude sanitaire dans une habitation comportant un réseau aéraulique et un chauffe-eau (4) thermodynamique fonctionnant sur air extrait intégrant une pompe à chaleur, ledit chauffe-eau (4) comportant au moins une entrée pour l'aspiration de l'air extrait et une sortie pour le rejet de l'air vicié vers l'extérieur de l'habitation et un ventilateur d'aspiration de l'air extrait, **caractérisée en ce que** ledit chauffe-eau (4) comporte n entrées (18, 19, 20) pour l'aspiration de l'air extrait, n étant un nombre entier supérieur à 1, sur lesquelles sont connectées des conduites principales (6, 7, 8) reliant directement des bouches d'extraction (9, 10, 11) de n pièces (1, 2, 3) de l'habitation au chauffe-eau (4).

2. Installation de production d'eau chaude sanitaire dans une habitation selon la revendication précédente, **caractérisée en ce que** des pièces supplémentaires auxdites n pièces (1, 2, 3) peuvent être raccordées à l'installation au moyen de dispositifs intermédiaires de raccordement, du type té, fixés sur les conduites principales (6, 7, 8), des conduites secondaires étant prévues entre les bouches d'extraction desdites pièces supplémentaires et lesdits dispositifs de raccordement.

3. Installation de production d'eau chaude sanitaire dans une habitation selon l'une des revendications précédentes, **caractérisée en ce que** ledit chauffe-eau (4) comporte :
- deux entrées (19, 20) pour l'aspiration de l'air extrait de deux pièces sanitaires (2, 3) ;
- et une entrée (18) pour l'aspiration de l'air extrait d'une pièce cuisine (1) ;
trois conduites principales (6, 7, 8) étant prévues pour relier directement ces trois entrées (18, 19, 20) aux bouches d'extraction (9, 10, 11) des trois pièces (1, 2, 3).

4. Installation de production d'eau chaude sanitaire dans une habitation selon l'une des revendications précédentes, **caractérisée en ce que** le chauffe-eau (4) est principalement composé d'un réservoir d'eau (23) surmonté d'un réceptacle aéraulique (24) contenant le ventilateur et la pompe à chaleur, la surface supérieure dudit réceptacle (24) étant dotée de n orifices d'entrée (18, 19, 20) sur lesquels se raccordent les n conduites principales (6, 7, 8) pour l'entrée d'air extrait, et d'un orifice de sortie (21) sur lequel se raccorde une conduite (13) pour la sortie de l'air vicié.

5. Installation de production d'eau chaude sanitaire dans une habitation selon la revendication précédente, **caractérisée en ce que** le diamètre de chaque orifice d'entrée (18, 19, 20) correspond au diamètre de la bouche d'extraction (9, 10, 11) à laquelle il est directement relié via une conduite principale (6, 7, 8).

6. Installation de production d'eau chaude sanitaire dans une habitation selon l'une des revendications précédentes, **caractérisée en ce que** le diamètre des orifices d'entrée (18, 19, 20) est compris entre 80 et 160 mm.
